# FASCICULE DE BREVET EUROPEEN

(11) **EP 2 239 691 B1**
(45) Date de publication et mention de la délivrance du brevet: **23.05.2012**
(21) Numéro de dépôt: 10158555.2
(22) Date de dépôt: 31.03.2010
(51) Int. Cl.: G06K 19/077

(54) **Ensemble à clé mémoire comprenant une carte à microcircuit**
Einheit mit Speicherschlüssel, der eine Chipkarte umfasst
Unit with USB key including a chip card

(30) Priorité: 09.04.2009 FR 0952361
(43) Date de publication de la demande: 13.10.2010
(73) Titulaire: Oberthur Technologies, 92300 Levallois Perret (FR)
(72) Inventeur: Bosquet, Olivier, 35500 Vitré (FR); Capitaine, Christophe, 35220 Chateaubourg (FR)
(74) Mandataire: Desormiere, Pierre-Louis

(56) Documents cités:
- EP-A- 1 596 326
- WO-A-01/99046
- WO-A-2005/086086
- DE-A1- 10 344 049

## Description

La présente invention concerne le domaine technique des cartes à microcircuits, et plus particulièrement mais non spécifiquement le domaine des cartes d'identification à un réseau de téléphonie mobile.

Les cartes à microcircuits, désignées plus couramment par cartes à puce, comportent au moins un microcircuit électronique permettant de mémoriser et/ou traiter des données.

Habituellement, les cartes à puce disposent d'une interface de contacts externes conformes à la norme ISO 7816. Le microcircuit fait partie par exemple d'un module rapporté dans une cavité ménagée dans le corps de la carte. Le module comporte par exemple un substrat électriquement isolant, un microcircuit intégré porté par une des faces du substrat et une interface de contacts externes portée par l'autre face, l'interface étant électriquement reliée à des bornes du microcircuit.

Une carte d'identification est connue également sous le nom de carte SIM (acronyme anglais pour « Subscriber Identity Card Module ») ou carte USIM (pour « Universal Subscriber Identity Module » encore appelée carte UICC pour « UMTS Integrated Circuit Card ») ou plus généralement carte RUIM (pour "Removable Universal Identity Module").

Ces cartes comprennent généralement des moyens de traitement de données et des moyens de mémorisation de données pour le stockage des informations spécifiques à un utilisateur du réseau de téléphonie mobile.

La présence de cette carte au sein d'un terminal mobile (tel qu'un téléphone portable) permet à ce terminal (grâce aux informations contenues dans la carte d'identification) de se connecter au réseau et d'échanger des données avec d'autres dispositifs du réseau. Cette carte forme un élément sécurisé du téléphone permettant une authentification de l'utilisateur de cette carte grâce à une clef d'authentification mémorisée par exemple dans les moyens de mémorisation de la carte.

Actuellement, la norme ISO 7816 prévoit qu'une carte peut communiquer avec le protocole ISO 7816-3 en utilisant les contacts C1, C2, C3, C5, C6 et C7. Il est également connu d'utiliser d'autres protocoles de communication conjointement au protocole ISO 7816-3 pour les contacts C4 et C8 non encore attribués par la norme ISO 7816.

Ainsi, il est connu d'attribuer les contacts C4 et C8 pour réaliser une connexion de type à clé mémoire, par exemple de type à bus USB (acronyme anglais pour « Universal Serial Bus »), couramment désignée dans ce cas par « clé USB ».

On connait des documents EP1596326 et WO 2005/086086 des cartes à microcircuit présentant une série de contacts conformes à la norme ISO 7816 et une série de contacts conformes à une norme de clé mémoire.

On connait aussi l'état de la technique, notamment du document EP 1 535 240, une carte d'identification à un réseau de téléphonie mobile comprenant une interface de plages de contact correspondant aux contacts C1 à C8 définis par la norme ISO 7816-2. Dans ce document, les plages de contact C4 et C8 sont utilisées pour réaliser une connexion de type USB.

Pour utiliser cette carte SIM en clé USB, la carte est logée dans un boîtier spécifique muni d'un connecteur mâle enfichable dans un port USB par exemple d'un ordinateur personnel.

Ce connecteur mâle est pourvu de pattes de connexion au standard USB connectées à des pattes de connexion intermédiaires aptes à venir en contact avec les plages de l'interface externe de la carte lorsque cette dernière est insérée dans le boîtier.

Un tel ensemble à clé mémoire présente cependant l'inconvénient de nécessiter un boîtier pratiquement aussi encombrant qu'une clé mémoire classique puisqu'il comprend un connecteur mâle USB dont les dimensions et les caractéristiques sont normalisées. En outre, la réalisation d'un tel boîtier s'avère relativement complexe puisqu'il nécessite un corps en plastique et des éléments métalliques incorporés dans le corps en plastique pour permettre l'adaptation de la carte SIM en clé USB.

L'invention a notamment pour but de proposer un ensemble formant clé mémoire peu encombrant et relativement simple à réaliser tout en étant relativement esthétique.

A cet effet, l'invention a pour objet un ensemble tel que défini dans la revendication 1.

Par interface de contacts, on entend au sens de l'invention, l'ensemble des plages de contact externes affleurant la surface d'une carte à microcircuit et permettant la réalisation d'une communication par transmission électrique de données entre les contacts affleurant du module électronique de la carte et les contacts d'une tète de lecture d'un dispositif de lecture dans lequel la carte est insérée, par exemple un terminal mobile. Cette interface est réalisée de préférence dans une couche métallique.

L'avantage de l'invention réside dans le fait qu'en réunissant sur une même interface de contacts à la fois une première série de plages de contact conformes à une norme prédéfinie de cartes à microcircuits et une deuxième série de plages de contact électrique conformes à une norme prédéfinie de clé mémoire, par exemple de type à bus USB, il n'est pas nécessaire de prévoir un boîtier muni d'un connecteur mâle enfichable dans une prise USB car c'est la carte portant l'interface qui forme la partie enfichable dans le connecteur femelle USB.

Le boîtier d'adaptation de la carte à microcircuit portant l'interface peut être formé dans un seul matériau, par exemple électriquement isolant et peut être complètement dépourvu d'éléments métalliques car la deuxième série de contacts de l'interface permet une connexion directe aux pattes de connexion électrique du port USB.

En outre, on notera que l'homme du métier est détourné de la solution proposée par l'invention, En effet, les cartes à microcircuit de petits formats, tels que les cartes SIM au format ID-000 défini par la norme ISO 7816, en comparaison avec des cartes de plus grand format (tel que le format ID-1), imposent des contraintes dimensionnelles qui semblent, à première vue, s'opposer à la réalisation d'une carte polyvalente permettant de fonctionner aussi bien en carte SIM qu'en clé USB.

On a ainsi constaté, de façon surprenante, que la réunion des deux séries de plages sur une même interface d'une carte SIM était réalisable en la modifiant de façon judicieuse de manière à ce qu'elle soit insérable aussi bien dans un dispositif de lecture, tel qu'un terminal mobile, que dans un port USB et ce malgré les contraintes dimensionnelles des normes à microcircuit.

Bien entendu, pour former la clé mémoire à partir de la carte, il est nécessaire d'adapter l'épaisseur de la carte à celle normalisée des connecteurs mâles USB mais la connexion électrique est effectuée directement à partir de l'interface et non plus à l'aide d'un boîtier externe.

La fabrication d'un tel ensemble s'en trouve alors simplifiée puisque le boîtier peut être réalisé dans un seul matériau.

Dans un mode de réalisation, les plages de contact de la première série sont conformes à la norme ISO 7816. Dans ce cas, de préférence, les plages de contact de la première série correspondent aux contacts C1, C2, C3, C5, C6, C7 de la norme ISO 7816. L'interface est de préférence réalisée dans une couche métallique.

La carte de l'ensemble selon l'invention est insérable dans un port conforme à la norme prédéfinie grâce à la partie enfichable du corps de carte.

De préférence, la carte est inscriptible dans un contour d'une carte au format USIM, SIM ou UICC. Ainsi, la carte est insérable dans un compartiment prévu à cet effet, d'un terminal mobile sans nécessiter des adaptations spécifiques pour cette carte. En outre, de préférence, la première série de plages de contact est positionnée sur le corps de carte conformément à la norme ISO 7816. Bien entendu, l'invention n'est pas limitée à la carte SIM et peut concerner d'autres formats de cartes.

Dans un mode de réalisation, le corps de carte comprend au moins une échancrure délimitant la largeur de la partie enfichable, cette échancrure étant agencée de manière à ce que la largeur soit conforme à celle d'un connecteur mâle conforme à la norme prédéfinie de clé mémoire.

Cette échancrure est ménagée dans le corps de carte de préférence au niveau du détrompeur de manière à ce que le format de la carte soit sensiblement inchangé : en effet seul le détrompeur a une forme modifiée et est échancré pour délimiter la partie enfichable du corps de carte. Ainsi, de préférence, le corps de carte comprend une unique échancrure, cette échancrure formant en outre un détrompeur mécanique de la carte.

De préférence, le boîtier comprend un cache agencé pour masquer la première série de contacts et laisser apparente la deuxième série de contacts lorsque la carte insérée dans le boîtier. Ainsi, le cache permet de protéger la première série de plages de contact non utilisée lors de la mise en oeuvre de la fonction clé mémoire de l'ensemble tout en étant particulièrement esthétique puisque seule la fonctionnalité clé USB est apparente. En outre, le cache peut former un support pour un motif décoratif imprimé, en relief, etc.

Dans un mode de réalisation, le boîtier est muni de moyens de guidage définissant une trajectoire d'introduction de la carte dans le boîtier.

En outre, de préférence, le boîtier comprend une butée de blocage de la carte dans une position insérée dans le boîtier apte à coopérer avec un épaulement formé par une échancrure latérale du corps de la carte délimitant la partie enfichable. Ainsi l'utilisateur insère la carte dans le boîtier, et une fois que l'épaulement atteint la butée, l'utilisateur sait que la carte est dans la position insérée permettant l'utilisation de l'ensemble en clé électronique.

En outre, dans un mode de réalisation préféré, le boîtier comprend un orifice pour le raccordement à un équipement externe. Un équipement externe peut être par exemple un porte-clés ou encore un sac à main, etc. Ceci permet d'éviter notamment la perte du dispositif.

De préférence, le boîtier forme un pendentif pour un équipement externe et est muni d'un cordon à boucle de raccordement du boîtier à l'équipement externe. Ainsi, outre l'aspect fonctionnel du boîtier, ce dernier a également un aspect très esthétique en formant un pendentif par exemple agencé pour être accroché au boîtier d'un terminal mobile.

De préférence, afin de protéger la clé mémoire d'impacts, le boîtier comprend un capuchon amovible apte à couvrir la deuxième série de contacts.

D'autres caractéristiques et avantages de l'invention apparaîtront à la lumière de la description qui suit, faite en référence aux dessins annexés dans lesquels :
- la figure 1 est une vue en perspective d'un ensemble à clé mémoire de type à bus USB comprenant une carte à microcircuit et un boîtier selon un mode de réalisation de l'invention ;
- la figure 2 est une vue en perspective de la carte à microcircuit de l'ensemble de la figure 1 ;
- la figure 3 est une vue de dessus d'un module à microcircuit incorporé dans la carte des figures 1 et 2 portant une interface de contacts externes de la carte ;
- la figure 4 est une vue de dessous du module de la figure 3 ;
- la figure 5 est une vue de dessus du corps de la carte de la figure 2 dépourvu du module des figures 3 et 4 ;
- la figure 6 représente une vue de dessus au format ID-1 comprenant une prédécoupe correspondant à la carte de la figure 2 ;
- la figure 7 représente une vue en perspective du boîtier de l'ensemble de la figure **1** ;
- la figure 8 représente un ensemble à clé mémoire selon une variante de l'invention ;
- la figure 9 représente un terminal mobile portant un ensemble à clé mémoire selon la figure 8.

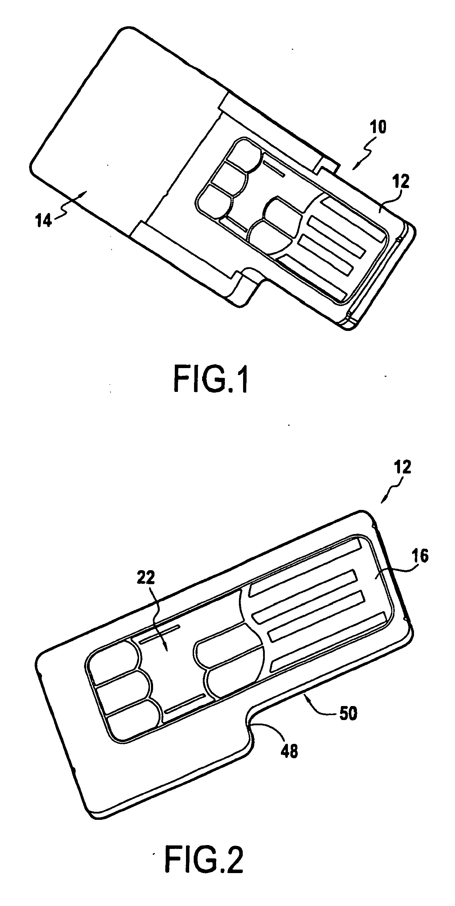

On a représenté sur **la** **figure 1** un ensemble à clé mémoire selon l'invention. Cet ensemble est désigné par la référence générale 10. Cet ensemble à clé mémoire est dans l'exemple décrit de type à bus USB (acronyme anglais correspondant à Universal Serial Bus). Classiquement, une clé mémoire est un support comprenant des moyens de stockage de données numériques pour leur transport d'un équipement informatique à un autre.

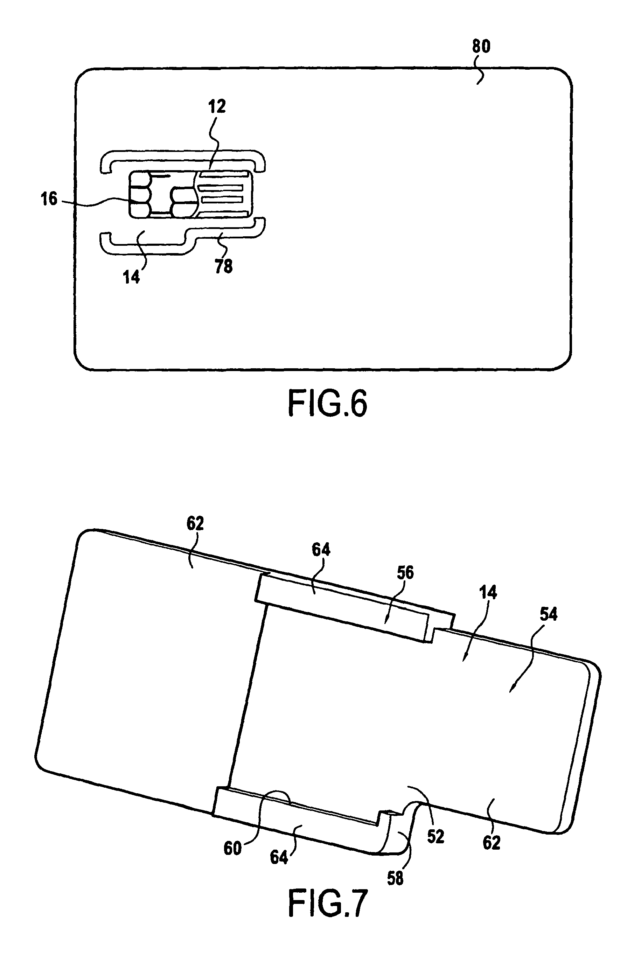

Cet ensemble 10 comprend une carte à microcircuit 12 représentée en détail sur **la** **figure 2** et un boîtier 14 de réception de la carte 12 apte à recevoir cette dernière de façon amovible, représenté plus en détail sur **la** **figure 7**.

Dans ce mode de réalisation, la carte à microcircuit 12 est une carte d'identification à un réseau de téléphonie mobile et a un format correspondant sensiblement au format ID-000, désigné également par format micro-SIM ou Plug-in SIM défini par la norme ISO 7816. En variante, d'autres formats de carte peuvent être choisis.

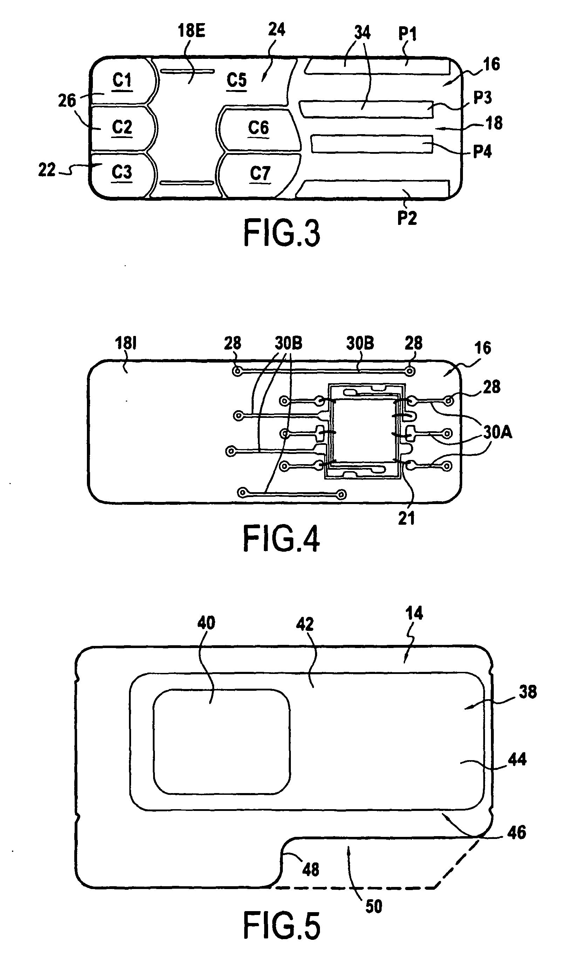

Plus précisément, la carte 10 comprend un module 16 à microcircuit représenté en détail sur **les** **figures 3 et 4**. De façon classique, ce module à microcircuit 16 comprend un support électriquement isolant 18 délimitant des première 181 et deuxième 18E faces opposées, dites respectivement interne et externe. Le support 18 est par exemple réalisé en fibre de verre de type époxy, en polyester ou bien en papier et a une épaisseur comprise par exemple entre 0.1 mm et 0.2 mm.

Le module 16 comprend en outre un microcircuit 20 porté par la face interne 181 du support 18. Dans cet exemple, ce microcircuit 20 comprend des moyens de traitement de données et des moyens de mémorisation de données pour le stockage des informations spécifiques à un utilisateur du réseau de téléphonie mobile.

En outre, la face externe 18E porte une interface 22 de contacts externes apte à communiquer par contact avec un ou plusieurs équipements externes tels que par exemple un terminal mobile.

Cette interface 22 comprend une première série 24 de plages 26 métalliques de contact électrique, conformes à une norme prédéfinie de cartes à microcircuits. Par exemple, les plages de contact de la première série 24 sont conformes à la norme ISO 7816.

Dans ce mode de réalisation, les plages 26 de contact de la première série 24 correspondent aux contacts C1, C2, C3, C5, C6, C7 de la norme ISO 7816.

En outre, comme cela est visible notamment sur **la** **figure 2**, l'interface physique 22 s'étend sur une zone très inférieure à la surface totale de la carte 12.

L'interface physique 22 de la carte est de préférence réalisée dans une couche de matériau métallique telle que du cuivre mais peut également être réalisée, en variante, par sérigraphie d'encre conductrice de type encre époxy chargée de particules d'argent ou d'or ou par sérigraphie d'un polymère électriquement conducteur.

De façon classique, les plages 26 sont raccordées électriquement au microcircuit 20 par des fils électriquement conducteurs, tels que par exemple des fils d'or 21, traversant des vias 28 ménagés dans le support 18 du module 16, eux-mêmes raccordés à des pistes 30 électriquement conductrices de liaison s'étendant sur la face interne 181 du support 18.

Comme cela est représenté sur **la** **figure 4****,** le microcircuit 20 est raccordé à la première série de plages 24 par un premier groupe de pistes de liaison 30A. Ces pistes 30 sont connectées à des bornes de connexion du microcircuit 20 par des fils 21. Dans cet exemple, le microcircuit 20 s'étend sensiblement à l'aplomb de la première série de contacts 24.

Plus particulièrement, l'interface de contacts 22 comprend une deuxième série 32 de plages 34 métalliques de contact électrique, conformes à une norme prédéfinie de clé mémoire, en particulier, de clé mémoire de type à bus USB.

Cette deuxième série 32 est agencée pour la connexion électrique directe avec un connecteur femelle conforme à la norme prédéfinie de clé mémoire (non représenté), désigné par la suite, « port USB ». La deuxième série 32 de plages 34 de contact est également raccordée électriquement au microcircuit 20.

Ainsi, le microcircuit 20 comprend des moyens de communication dans un protocole USB de manière à ce que lorsque les plages 34 de contacts de la deuxième série 32 sont en contact électrique avec des pattes de connexion d'un port USB, le microcircuit 20 puisse échanger des données avec l'équipement externe muni du port USB.

Cette deuxième série 34 comprend dans cet exemple quatre plages 34 de contact conformes au standard USB :
- une première plage P1, désignée couramment par « VCC » est destinée à l'alimentation ;
- une deuxième plage P2 est destinée à la mise à la masse et est désignée couramment par « GND » ;
- des troisième et quatrième plages P3 et P4, désignées également D- et D+ sont destinées à la communication des données conformément au protocole USB.

Cette deuxième série 34 est raccordée tout comme la première série 24 au microcircuit 20 par des pistes électriquement conductrices de liaison appartenant à un deuxième groupe noté 30B. Comme le microcircuit 20 est dans une position sensiblement déportée par rapport à cette deuxième série 34, les pistes électriquement conductrices 30B sont prolongées sensiblement dans un sens allant de la première série 24 vers la deuxième série 32.

Bien que cela ne soit pas représenté sur les figures, le microcircuit 20 et les fils 21 sont enrobés généralement par une résine de protection. Certaines pistes 30B comprennent à leurs deux extrémités un via 28 pour le raccordement électrique d'un contact USB à un contact SIM (par exemple le raccordement du contact USB P1 au contact SIM C1).

Comme cela est représenté sur **la** **figure 2**, la carte 10 comprend un corps 36 de carte délimitant les dimensions extérieures de la carte 10. La carte comprend une cavité 38 ménagée dans le corps 36 et le module 16 à microcircuit est logé de façon classique dans la cavité 38.

Généralement et comme cela est représenté sur **la** **figure 5**, la cavité 38 comprend une zone centrale profonde 40 munie d'un fond pour le logement du microcircuit 20 et une zone périphérique surélevée 42 par rapport à la zone centrale 40 délimitant un gradin avec le fond. Cette zone périphérique 42 comprend une surface 44 d'appui surélevée par rapport au fond de la cavité 38 sur laquelle reposent les bords du support 18 de module.

Une telle cavité 38 est généralement obtenue par usinage, typiquement par fraisage ou lamage en deux opérations :
- un grand lamage pour former la zone périphérique 42 correspondant à la profondeur du gradin,
- un petit lamage pour former la zone centrale plus profonde 40.

Plus précisément, la deuxième série 32 de plages 34 de contact du module 16 est portée par une partie 46 du corps de carte enfichable dans un port USB.

Ainsi, le corps de carte 14 comprend au moins une échancrure 48 délimitant la largeur de la partie enfichable 46, cette échancrure 48 étant agencée de manière à ce que la largeur soit conforme à celle d'un connecteur mâle conforme à la norme prédéfinie USB.

En outre, comme cela est représenté sur **la** **figure 5**, dans ce mode de réalisation, la carte 12 est inscriptible dans un contour de carte au format ID-000, dite également SIM. En variante, le format peut être le format USIM, SIM ou UICC.

Ainsi, on a représenté sur **la** **figure 5** en trait discontinu, une carte classique au format ID-000 relatif à la norme Plug-in UICC et essentiellement destinée à être insérée dans un terminal mobile a un corps de carte de forme rectangulaire de 15mm*25mm*0.76mm avec un détrompeur de 3mm par 3mm dans un coin du support de carte.

La carte 12 selon l'invention, représentée en trait continu sur cette même figure, a un format inscriptible dans le format ID-000 c'est-à-dire que tous les sommets se trouvent sur le périmètre de la carte au format ID-000 telle que décrite ci-dessus. En outre, la carte 12 comprend un détrompeur 50 en forme d'échancrure de manière à délimiter une largeur prédéfinie pour la partie enfichable 46.

De préférence, la carte 12 comprend une unique échancrure 48 de manière à ce que lorsque la carte 12 est insérée dans un logement d'un terminal mobile, la tenue de la carte 12 dans son logement soit sensiblement inchangée par rapport à une carte classique ne comprenant pas d'échancrure mais seulement un détrompeur en coin.

La première série 24 de plages 26 de contact est positionnée sur le corps de carte conformément à la norme ISO 7816.

L'épaisseur d'une carte au format ISO est de 0.76mm alors que l'épaisseur normalisée d'une clé mémoire selon un standard USB est d'environ 2mm.

Afin d'adapter l'épaisseur de la carte 12 à l'épaisseur normalisée pour son utilisation en clé USB, la carte 12 est insérée dans le boîtier 14 illustré sur **la** **figure 7**.

Plus précisément, le boîtier 14 comprend un corps 52 formant support de la carte 12 agencé pour recevoir la carte de façon amovible et comprend des moyens 54 d'adaptation d'épaisseur, au moins au niveau de la partie enfichable, à l'épaisseur normalisée d'un connecteur USB.

De préférence, le boîtier 14 est muni de moyens 56 de guidage définissant une trajectoire d'introduction de la carte 12 dans le boîtier 14.

En outre, dans ce mode de réalisation, le boîtier 14 comprend une butée 58 de blocage de la carte 12 dans une position insérée dans le boîtier 14 apte à coopérer avec un épaulement formé par l'échancrure latérale 48 du corps de carte délimitant la partie enfichable 46.

Le boîtier 14 comprend ainsi un canal 60 comprenant une base 62 formant les moyens d'adaptation 54 et des bords 64 latéraux formant les moyens de guidage en translation 56 de la carte 12 dans le canal 60. En outre, au moins un des bords 64 comprend un rebord de retenue selon une direction verticale de la carte 12 dans sa position insérée. En outre, l'un des bords 64 est muni de la butée de blocage 58.

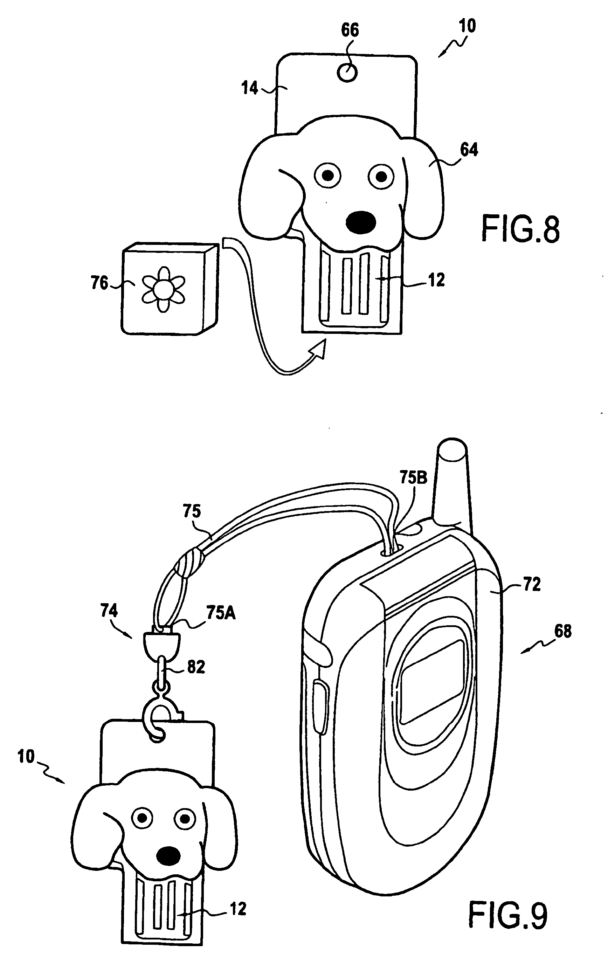

On a représenté sur **les** **figures 8 et 9** une variante d'un boîtier 14 de l'ensemble 10 **des** **figures 1 à 7**. Dans cette variante, les éléments analogues à ceux du mode de réalisation décrit ci-dessus sont désignés par des références identiques.

Conformément à cette variante, le boîtier 14 comprend un cache 64 agencé pour masquer la première série 24 de contacts et laisser apparente la deuxième série 32 de contacts lorsque la carte 12 insérée dans le boîtier 14. Ce cache 64 peut éventuellement comprendre un objet décoratif imprimé, peint ou formé en relief. En particulier, ce cache 64 permet de protéger la première série 24 de contacts, lorsque cette dernière est inutilisée de manipulations intempestives de l'utilisateur de la carte risquant d'endommager les plages de contact. Ce cache 64 forme également des moyens de retenue de la carte 12 selon la direction verticale.

Par ailleurs, de préférence, le boîtier 14 est muni d'un orifice 66 pour le raccordement à un équipement externe, par exemple un terminal mobile 68 tel que celui représenté sur **la** **figure 9**.

De façon classique, le terminal mobile 68 comprend une encoche 70 ménagée sur son boîtier 72 permettant d'accrocher un cordon souple tel qu'une chaîne. Un tel cordon peut avoir une fonction précise par exemple de sécurité en prévenant la perte ou le vol du terminal mobile 68 lorsqu'on l'accroche à un sac à main, une valise ou encore un noeud de ceinture de pantalon, mais peut également porter à son extrémité libre un élément décoratif. C'est le cas notamment des pendentifs pour portable.

Ainsi, le boîtier 14 forme dans cette variante, un pendentif 74 agencé pour être accroché au boîtier 72 du terminal 68 et est accroché à une extrémité libre 75A d'un cordon 75 à boucle. Ce cordon à boucle 75 est accroché à son extrémité opposée 75B à l'extrémité libre 75A à l'encoche du terminal 68.

Ainsi, lorsque la carte 12 est insérée dans le terminal mobile 68, le boîtier 14 est accroché au terminal mobile 68 de façon esthétique et décorative. Le cordon 75 est accroché au boîtier au moyen par exemple d'une attache 82 à fermoir apte à être inséré dans l'orifice de raccordement 66 du boîtier 14.

En outre, de préférence, le boîtier 14 comprend un capuchon 76 amovible apte à couvrir la deuxième série de contacts 32. De préférence, l'objet décoratif se prolonge également sur le capuchon 76 de manière à ce que lorsque le boîtier 14 est fermé par le capuchon 76, les deux parties du motif décoratif portées chacune par le capuchon et le cache se complètent.

On a représenté sur **la** **figure 6** un corps 80 de carte au format ID-1 dans lequel est formé une prédécoupe 78. Cette prédécoupe 78 correspond au corps de carte de la carte 12.

On va maintenant décrire les principaux aspects d'un ensemble formant clé électronique selon l'invention.

Pour utiliser la carte comme une carte SIM, l'utilisateur insère la carte SIM dans le compartiment prévu à cet effet de son terminal mobile. En particulier, du fait que le format de la carte selon l'invention est inscriptible dans le format d'une carte SIM classique conforme par exemple au format ID-000, la carte selon l'invention est parfaitement adaptable à un terminal mobile standard. En outre, dans ce cas, le boîtier est par exemple attaché au terminal mobile et forme alors un pendentif décoratif.

Pour l'utiliser en clé mémoire, l'utilisateur prend le boîtier en plastique dépourvu d'éléments métalliques ou électroniques et insère la carte dans le boîtier. Du fait que le corps de carte est muni d'une partie enfichable dans un port USB et que le boîtier comprend des moyens d'adaptation de l'épaisseur de cette partie à l'épaisseur normalisée d'un connecteur mâle USB, la carte est apte à être utilisée en clé mémoire.

Il est bien entendu que les modes de réalisation qui viennent d'être décrits ne présentent aucun caractère limitatif et qu'ils pourront recevoir toute modification désirable sans sortir pour cela du cadre de l'invention.

## Revendications

1. Ensemble à clé mémoire (10), en particulier de type à bus USB, comprenant une carte à microcircuit (12) et un boîtier (14) de réception de la carte (12), le boîtier (14) comprenant un corps formant support de la carte agencé pour recevoir la carte (12) de façon amovible, le boîtier comprenant également des moyens (54) d'adaptation d'épaisseur de la carte (12), au moins au niveau d'une partie enfichable (46) de la carte, à l'épaisseur normalisée d'un connecteur de clé mémoire, la carte (12) comprenant un corps de carte délimitant les dimensions extérieures de la carte (12), une cavité (38) ménagée dans le corps de carte et un module (16) logé dans la cavité (38), le module (16) comprenant un support (18), un microcircuit (20) porté par l'une des faces (181) du support (18), et une interface (22) de contacts externes portée par l'autre face (18E) du support (18), ladite interface (22) comprenant une première série (24) de plages (26) de contact électrique, conformes à une norme prédéfinie de cartes à microcircuit, et une deuxième série (32) de plages (34) de contact électrique, conformes à une norme prédéfinie de clé mémoire, en particulier de type à bus USB, pour la connexion électrique directe avec un connecteur femelle conforme à cette norme de clé mémoire, les deux séries (24, 32) de plages étant raccordées au microcircuit (20), la deuxième série (32) de plages (34) étant portée par la partie enfichable (46) du corps de carte dans un connecteur femelle conforme à la norme prédéfinie de clé mémoire.

2. Ensemble (10) selon la revendication 1, dans lequel les plages (26) de la première série (24) sont conformes à la norme ISO 7816.

3. Ensemble (10) selon la revendication 2, dans lequel les plages (26) de la première série (24) correspondent aux contacts C1, C2, C3, C5, C6, C7 de la norme ISO 7816.

4. Ensemble (10) selon l'une quelconque des revendications 1 à 3, ladite carte (12) étant inscriptible dans un contour d'une carte au format USIM, SIM ou UICC.

5. Ensemble (10) selon la revendication 4, dans lequel la première série (24) de plages (26) est positionnée sur le corps de carte conformément à la norme ISO 7816.

6. Ensemble (10) selon l'une quelconque des revendications 1 à 5, dans lequel le corps de carte comprend au moins une échancrure (48) délimitant la largeur de la partie enfichable (46), cette échancrure (48) étant agencée de manière à ce que la largeur soit conforme à celle d'un connecteur mâle conforme à la norme prédéfinie de clé mémoire.

7. Ensemble (10) selon la revendication 6, dans lequel le corps de carte comprend une unique échancrure (48), cette échancrure formant un détrompeur mécanique (50) de la carte (12).

8. Ensemble (10) selon l'une quelconque des revendications 1 à 7 dans lequel le boîtier (14) comprend un cache (64) agencé pour masquer la première série (24) et laisser apparente la deuxième série (32) lorsque la carte (12) est insérée dans le boîtier (14).

9. Ensemble (10) selon l'une quelconque des revendications 1 à 8, dans lequel le boîtier (14) est muni de moyens (56) de guidage définissant une trajectoire d'introduction de la carte (12) dans le boîtier (14).

10. Ensemble (10) selon l'une quelconque des revendications 1 à 9 dans lequel le boîtier (14) comprend une butée (58) de blocage de la carte (12) dans une position insérée dans le boîtier (14) apte a coopérer avec un épaulement formé par une échancrure latérale (48) du corps de la carte (12) délimitant la partie enfichable (46).

11. Ensemble (10) selon l'une quelconque des revendications 1 à 10, dans lequel le boîtier (14) comprend un orifice (66) pour le raccordement à un équipement externe.

12. Ensemble (10) selon l'une quelconque des revendications 1 à 11, dans lequel le boîtier (14) forme un pendentif (74) pour un équipement externe et est muni d'un cordon (75) à boucle de raccordement du boîtier (14) à l'équipement externe.

13. Ensemble (10) selon l'une quelconque des revendications 1 à 12, dans lequel le boîtier (14) comprend un capuchon (76) amovible apte à couvrir la deuxième série (32).

## Claims

1. A memory key unit (10), in particular of the USB bus type, comprising a microcircuit card (12) and a housing (14) for receiving the card (12), the housing (14) comprising a body forming a support for the card that is arranged to receive the card (12) removably , the housing also comprising means (54) for matching the thickness of the card (12) to the standardized thickness of a memory key connector, at least in a pluggable portion (46) of the card, the card (12) comprising a card body defining the outside dimensions of the card (12), a cavity (38) formed in the card body, and a module (16) housed in the cavity (38), the module (16) comprising a support (18), a microcircuit (20) carried by one of the faces (181) of the support (18) and an interface (22) of external contacts carried by the other face (18E) of the support (18), said interface (22) comprising a first series (24) of electric contact areas (26) shaped to comply with a predefined standard for microcircuit cards, and a second series (32) of electric contact areas (34) shaped to comply with a predefined standard for a memory key, in particular of the USB bus type, for direct electrical connection with a female connector complying with this memory key standard, the two series (24, 32) of areas being connected to the microcircuit (20), the second series (32) of areas (34) being carried by the pluggable portion (46) of the card body in a female connector in compliance with the predefined memory key standard.

2. A unit (10) according to claim 1, wherein the areas (26) of the first series (24) comply with the ISO 7816 standard.

3. A unit (10) according to claim 2, wherein the areas (26) of the first series (24) correspond to the contacts C1, C2, C3, C5, C6, and C7 of the ISO 7816 standard.

4. A unit (10) according to any one of claims 1 to 3, said card (12) being inscribable within the outline of a card of the USIM, SIM, or UICC format.

5. A unit (10) according to claim 4, wherein the first series (24) of areas (26) is positioned on the card body in compliance with the ISO 7816 standard.

6. A unit (10) according to any one of claims 1 to 5, wherein the card body includes at least one notch (48) defining the width of the pluggable portion (46), the notch (48) being arranged so that the width complies with the width of a male connector in accordance with the predefined standard for a memory key.

7. A unit (10) according to claim 6, wherein the card body includes a single notch (48), the notch forming mechanical keying means (50) for the card (12).

8. A unit (10) according to any one of claims 1 to 7, wherein the housing (14) includes a cover (64) arranged to mask the first series (24) while leaving the second series (32) visible when the card (12) is inserted in the housing (14).

9. A unit (10) according to any one of claims 1 to 8, wherein the housing (14) is provided with guide means (56) defining a path for inserting the card (12) in the housing (14).

10. A unit (10) according to any one of claims 1 to 9, wherein the housing (14) includes an abutment (58) for blocking the card (12) in a position inserted in the housing (14) and suitable for co-operating with a shoulder formed by a side notch (48) in the body of the card (12) defining the pluggable portion (46).

11. A unit (10) according to any one of claims 1 to 10, wherein the housing (14) includes an orifice (66) for connection to external equipment.

12. A unit (10) according to any one of claims 1 to 11, wherein the housing (14) forms a pendant (74) for external equipment and is provided with a looped cord (75) for connecting the housing (14) to the external equipment.

13. A unit (10) according to any one of claims 1 to 12, wherein the housing (14) includes a removable cap (76) suitable for covering the second series (32).

## Patentansprüche

1. Einheit mit Speicherschlüssel (10), insbesondere vom Typ mit USB-Bus, umfassend eine Karte mit Mikroschaltkreis (12) sowie ein Gehäuse (14) zur Aufnahme der Karte (12), wobei das Gehäuse (14) einen einen Halter der Karte bildenden Körper umfaßt, der angeordnet ist, um die Karte (12) herausnehmbar aufzunehmen, wobei das Gehäuse auch Mittel (54) umfaßt, um die Dicke der Karte (12) - wenigstens im Bereich eines einsteckbaren Teils (46) der Karte - der Normdicke eines Speicherschlüsselsteckverbinders anzupassen, wobei die Karte (12) einen Kartenkörper, welcher die Außenabmessungen der Karte (12) begrenzt, eine in dem Kartenkörper ausgebildete Vertiefung (38) sowie ein in der Vertiefung (38) aufgenommenes Modul (16) umfaßt, wobei das Modul (16) einen Halter (18), einen Mikroschaltkreis (20), welcher von einer der Seiten (181) des Halters (18) getragen wird, sowie eine Schnittstelle (22) für externe Kontakte, welche von der anderen Seite (18E) des Halters (18) getragen wird, umfaßt, wobei die Schnittstelle (22) eine erste Reihe (24) von elektrischen Kontaktbereichen (26) entsprechend einer vordefinierten Norm für Karten mit Mikroschaltkreis sowie eine zweite Reihe (32) von elektrischen Kontaktbereichen (34) entsprechend einer vordefinierten Norm für Speicherschlüssel, insbesondere vom Typ mit USB-Bus, für die direkte elektrische Verbindung mit einer Buchse entsprechend dieser Speicherschlüsselnorm umfaßt, wobei die beiden Reihen (24, 32) von Bereichen mit dem Mikroschaltkreis (20) verbunden sind, wobei die zweite Reihe (32) von Bereichen (34) von dem in eine Buchse entsprechend der vordefinierten Speicherschlüsselnorm einsteckbaren Teil (46) des Kartenkörpers getragen wird.

2. Einheit (10) nach Anspruch 1, wobei die Bereiche (26) der ersten Reihe (24) gemäß der ISO-Norm 7816 sind.

3. Einheit (10) nach Anspruch 2, wobei die Bereiche (26) der ersten Reihe (24) den Kontakten C1, C2, C3, C5, C6, C7 der ISO-Norm 7816 entsprechen.

4. Einheit (10) nach einem der Ansprüche 1 bis 3, wobei die Karte (12) in eine Kontur einer Karte im USIM-, SIM- oder UICC-Format einfügbar ist.

5. Einheit (10) nach Anspruch 4, wobei die erste Reihe (24) von Bereichen (26) auf dem Kartenkörper entsprechend der ISO-Norm 7816 angeordnet ist.

6. Einheit (10) nach einem der Ansprüche 1 bis 5, wobei der Kartenkörper wenigstens eine Aussparung (48) aufweist, welche die Breite des einsteckbaren Teils (46) begrenzt, wobei diese Aussparung (48) derart angeordnet ist, daß die Breite entsprechend derjenigen eines Steckers gemäß der vordefinierten Speicherschlüsselnorm ist.

7. Einheit (10) nach Anspruch 6, wobei der Kartenkörper eine einzige Aussparung (48) umfaßt, wobei diese Aussparung eine mechanische Unverwechselbarkeitseinrichtung (50) der Karte (12) bildet.

8. Einheit (10) nach einem der Ansprüche 1 bis 7, wobei das Gehäuse (14) eine Abdeckung (64) aufweist, die angeordnet ist, um die erste Reihe (24) abzudecken und um die zweite Reihe (32) sichtbar zu lassen, wenn die Karte (12) in das Gehäuse (14) eingesetzt ist.

9. Einheit (10) nach einem der Ansprüche 1 bis 8, wobei das Gehäuse (14) mit Führungsmitteln (56) ausgestattet ist, die einen Weg zum Einführen der Karte (12) in das Gehäuse (14) definieren.

10. Einheit (10) nach einem der Ansprüche 1 bis 9, wobei das Gehäuse (14) einen Anschlag (58) zum Blockieren der Karte (12) in einer in das Gehäuse (14) eingesetzten Position umfaßt, der geeignet ist, mit einer Schulter, welche durch eine den einsteckbaren Teil (46) begrenzende seitliche Aussparung (48) des Körpers der Karte (12) gebildet ist, zusammenzuwirken.

11. Einheit (10) nach einem der Ansprüche 1 bis 10, wobei das Gehäuse (14) eine Öffnung (66) für die Verbindung mit einer externen Einrichtung umfaßt.

12. Einheit (10) nach einem der Ansprüche 1 bis 11, wobei das Gehäuse (14) einen Anhänger (74) für eine externe Einrichtung bildet und mit einem Band (75) mit Schlaufe zum Verbinden des Gehäuses (14) mit der externen Einrichtung ausgestattet ist.

13. Einheit (10) nach einem der Ansprüche 1 bis 12, wobei das Gehäuse (14) eine abnehmbare Kappe (76) umfaßt, die geeignet ist, die zweite Reihe (32) abzudecken.
